# EUROPÄISCHE PATENTSCHRIFT

(11) **EP 0 503 676 B1**
(45) Veröffentlichungstag und Bekanntmachung des Hinweises auf die Patenterteilung: **04.05.1994**
(21) Anmeldenummer: 92104439.2
(22) Anmeldetag: 14.03.1992
(51) Int. Cl.: C02F 3/20, C02F 3/24, B01F 3/04

(54) **Vorrichtung zur Anreicherung von Wasser mit Sauerstoff**
Device for enrichment of water with oxygen
Dispositif d'enrichissement d'eau en oxygène

(30) Priorität: 15.03.1991 DE 4108457; 25.06.1991 DE 4120889
(43) Veröffentlichungstag der Anmeldung: 16.09.1992
(73) Patentinhaber: SANWA SEIDLITZ GMBH, D-34549 Edertal (DE)
(72) Erfinder: Seidlitz, Ulrich, W-3593 Edertal-Rehbach (DE)
(74) Vertreter: Walther, Horst, Dipl.-Ing.

(56) Entgegenhaltungen:
- DD-A- 269 611
- DE-A- 2 649 177
- FR-A- 2 218 291
- FR-A- 2 293 236
- GB-A- 197 369
- GB-A- 765 623
- GB-A- 1 559 018

## Beschreibung

Die Erfindung betrifft eine Vorrichtung zur Anreicherung von Wasser mit Sauerstoff, bestehend aus einem Hohlkörper mit einer über dem Wasserspiegel angeordneten Lochplatte.

Aus der GB - PS 197369 ist eine Vorrichtung der eingangs genannten Art bekannt; jedoch ist hier die Anreicherung des Wassers mit dem eingeführten Gas aufgrund der Anordnung der Gaszu- bzw Ableitung relativ ineffizient.

Eine Vorrichtung zur Anreicherung von Wasser mit Sauerstoff der eingangs genannten Art ist auch in der DDR-PS 269 611 beschrieben.

Die dort beschriebene Vorrichtung besteht aus einem Hohlzylinder, welcher oben geschlossen ist und welcher teilweise in das Wasser eintaucht und zu diesem Zweck mit Schwimmern versehen ist. Innerhalb dieses zylinderförmigen Behälters ist eine Lochscheibe angebracht, die mit Abstand vom Wasserspiegel angeordnet ist. Dabei wird in den Behälter Sauerstoff eingeführt und zwar in die in dem Behälter befindliche Wasserschicht, von der aus der Sauerstoff in den Raum über dem Wasserspiegel gelangt.

Bei diesem Verfahren erfolgt eine Aufteilung des anzureichernden Wassers in Form von Teilströmen mit Hilfe der Lochplatte, wobei zum großen Teil die Fremdgase entweichen, aber immer innerhalb des Behälters verbleiben, so daß trotz der Zuführung von Sauerstoff das in Teilströmen aufgeteilte anzureichende Wasser nur zu einem geringen Teil mit Sauerstoff angereichert werden kann, weil die Fremdgase sich auch im gewissen Umfange wieder in dem Wasser lösen.

Der Erfindung liegt die Aufgabe zugrunde, eine Vorrichtung zur Anreicherung von Wasser mit Sauerstoff zu schaffen, bei der die Zuführung des Sauerstoffes ohne Überdruck erfolgt und dafür Sorge getragen ist, daß fremdgasfreies Wasser mit Sauerstoff angereichert wird.
Das wird erfindungsgemäß dadurch erreicht, daß in einem Hohlkörper mehrere Lochplatten übereinander über dem Wasserspiegel angeordnet sind, wobei unter der obersten Lochplatte der Sauerstoff zugeführt und unter der untersten Lochplatte eine Abflußöffnung mit Drosselfunktion für die Fremdgase angeordnet ist und wobei über der obersten Lochplatte ein Wasserabschluß in Form einer Wasserschicht vorgesehen ist.

Bei dieser Vorrichtung ist demzufolge erreicht, daß durch die Aufteilung des anzureichenden Wassers in Teilströme mit Hilfe der Lochplatten und durch die Zuführung von Sauerstoff die Fremdgase aus dem Wasser gelöst und durch die Abflußöffnung abgeführt werden und anstelle der Fremdgase der Sauerstoff im Wasser angelagert wird. Wesentlich ist hierbei die Erkenntnis, daß sich die Gaszusammensetzung des Wassers immer auf die Gaszusammensetzung der Umgebung einstellt. Ist demnach in einem geschlossenen Behälter die Sauerstoffkonzentration hoch, werden bei diesem drucklosen Verfahren andere gelöste Gase, z.B. Stickstoff oder Kohlensäure, aus dem Wasser gelöst und der Sauerstoff aufgenommen. Hieraus folgt, daß die gleiche Menge an zugeführtem Sauerstoff, die vom Wasser aufgenommen werden soll, bei diesem drucklos arbeitenden Verfahren auch aus dem geschlossenen Behälter wieder abgeführt wird.

Dieser Anreicherungsvorgang erfolgt im wesentlichen unter Atmosphärendruck. Die Abflußöffnung muß dabei so bemessen sein, daß Umgebungsluft in den Behälter nicht eindringen kann, weshalb diese Abflußöffnung eine gewisse Drosselwirkung ausüben muß, damit ein Strömungsfluß nur in einer Richtung erreichbar ist. Durch Messungen konnte festgestellt werden, daß fast 90 % des eingeführten Sauerstoffes im Wasser gelöst wird.

Dabei können die Löcher der Lochplatte zur Erzielung eines Sprüheffektes konisch sich erweiternd ausgebildet sein.

Nach einem weiteren Merkmal der Erfindung ist über der Lochscheibe eine umlaufende Reinigungsvorrichtung, z.B. in Form einer Bürste angeordnet.

In der Zeichnung ist eine beispielsweise Ausführungsform dargestellt.

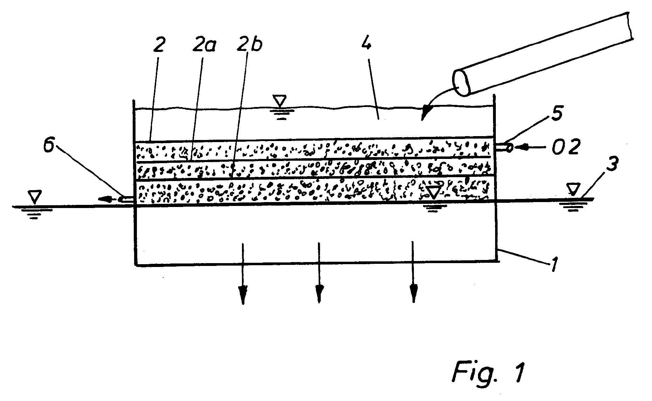

- Fig. 1: zeigt schematisch die erfindungsgemäße Vorrichtung;

Wie Fig. 1 zeigt, besteht die Vorrichtung im wesentlichen aus einem Hohlkörper in Form eines Rohres 1, in welchem mehrere Lochplatten 2, 2a und 2b angeordnet sind.
Die unterste Lochplatte 2b besitzt dabei einen gewissen Abstand von dem Wasserspiegel 3. Über der Lochplatte befindet sich ein Wasserabschluß in Form einer Wasserschicht 4, die ständig aufrechterhalten wird, indem mehr Wasser zugeführt wird, als durch die Lochplatte abgeht.

Durch die Lochplatten wird das mit Sauerstoff anzureichernde Wasser im Teilstrome aufgeteilt.
Die Zuführung des Sauerstoffes erfolgt mit Hilfe der Zuleitung 5 und zwar unterhalb der obersten Lochplatte 2 Die Abführung der Fremdgase erfolgt über die Ableitung 6 unterhalb der untersten Lochplatte 2b.

Damit über diese Abflußöffnung 6 nicht Umgebungsluft in den Hohlkörper 1 gelangt, ist diese Abflußöffnung mit einer Drosselfunktion ausgestattet, so daß nur eine Strömung in einer bestimmten Richtung zustande kommt. Die Zuführung des Sauerstoffs über die Leitung 5 erfolgt ohne nennenswerten Druck, so daß der Druck im Rohr in etwa dem Umgebungsdruck entspricht und die Aufnahme des Sauerstoffes entsprechend der dort herrschenden Sauerstoffkonzentration erfolgt, bis eine gewisse Sättigung erreicht ist.
Der Vorteil dieser Vorrichtung besteht darin, daß durch die Aufteilung des anzureichernden Wassers in Teilströme eine Entgasung erfolgt und dafür gesorgt ist, daß die Fremdgase über die Abflußleitung 6 entweichen können, so daß in den Räumen unterhalb der Lochplatte fremdgasfreies Wasser zur Verfügung steht, das nunmehr entsprechend der herrschenden Sauerstoffkonzentration Sauerstoff aufnehmen kann.

## Patentansprüche

1. Vorrichtung zur Anreicherung von Wasser mit Sauerstoff, bestehend aus einem Hohlkörper mit über dem Wasserspiegel angeordneten Lochplatten,
**dadurch gekennzeichnet**, daß mehrere Lochplatten (2,2a,2b) übereinander über dem Wasserspiegel (3) angeordnet sind, wobei unter der obersten Lochplatte (2) eine Einrichtung zur Sauerstoffzufuhr aufgebracht ist und unter der untersten Lochplatte (2b) eine Abflußöffnung (6) mit Drosselfunktion für die Fremdgase angeordnet ist.

2. Vorrichtung nach Anspruch 1
**dadurch gekennzeichnet**, daß die Löcher jeder Lochplatte (2,2a,2b) konisch sich erweiternd ausgebildet sind.

3. Vorrichtung nach Anspruch 1
**dadurch gekennzeichnet**, daß über der obersten Lochplatte (2) eine umlaufende Reinigungsvorrichtung, z.B. in Form einer Bürste angeordnet ist.

4. Vorrichtung nach Anspruch 1
**dadurch gekennzeichnet**, daß die oberste Lochplatte (2) einen massiven Rand aufweist, um das auf der Lochplatte (2) sich befindende Wasser auf einer bestimmten Höhe zu halten.

## Claims

1. Device for oxygen enrichment of water, consisting of a hollow body with apertured plates arranged above the water surface, characterised thereby that several apertured plates (2, 2a, 2b) are arranged one above the other above the water surface (3), wherein equipment for oxygen supply is mounted below the uppermost apertured plate (2) and an outflow opening (6), with a throttle function, for the foreign gases is arranged below the lowermost apertured plate (2b).

2. Device according to claim 1, characterised thereby that the apertures of each aperture plate (2, 2a, 2b) are formed to conically widen.

3. Device according to claim 1, characterised thereby that a rotary cleaning device, for example in the form of a brush, is arranged above the uppermost apertured plate (2).

4. Device according to claim 1, characterised thereby that the uppermost apertured plate (2) has a solid edge, in order to keep the water disposed on the apertured plate (2) to a certain level.

## Revendications

1. Dispositif pour enrichir de l'eau en oxygène, comportant un élément creux pourvu de plaques perforées disposées au-dessus du niveau de l'eau, **caractérisé** en ce que plusieurs plaques perforées (2, 2a, 2b) sont disposées les unes au-dessus des autres au-dessus du niveau (3) de l'eau, et dans lequel un organe d'amenée d'oxygène est disposé sous la plaque perforée supérieure (2),et un orifice de décharge (6) à effet d'étranglement pour ls gaz étrangers est disposé sous la plaque perforée inférieure (2b).

2. Dispositif selon la revendication 1, **caractérisé** en ce que les trous de chaque plaque perforée (2, 2a, 2b) ont une forme évasée conique.

3. Dispositif selon la revendication 1, **caractérisé** en ce qu' un dispositif de nettoyage, par exemple sous forme d'une brosse, est disposé sur la plaque perforée supérieure (2).

4. Dispositif selon la revendication 1, **caractérisé** en ce que la plaque perforée supérieure (2) comporte un rebord massif pour maintenir à un niveau déterminé l'eau se trouvant sur la plaque perforée (2).
